# EUROPÄISCHE PATENTANMELDUNG

(11) **EP 2 692 412 A1**
(43) Veröffentlichungstag der Anmeldung: **05.02.2014**
(21) Anmeldenummer: 12178656.0
(22) Anmeldetag: 31.07.2012
(51) Int. Cl.: B01D 53/14, B01D 53/18

(54) **Wärmenutzung zur CO2-Abscheidung**

(71) Anmelder: Siemens Aktiengesellschaft, 80333 München (DE)
(72) Erfinder: Kremer, Hermann, 65835 Liederbach (DE); Schneider, Rüdiger, 65817 Eppstein (DE); Schramm, Henning, 60596 Frankfurt am Main (DE); Vortmeyer, Nicolas, 91054 Erlangen (DE); Zimmermann, Gerhard, 91315 Höchstadt/Aisch (DE); Brunhuber, Christian, 91275 Auerbach (DE); Rost, Mike, 91058 Erlangen (DE)

(57) **Zusammenfassung**

Die Erfindung betrifft eine Einrichtung (1) zur Abscheidung von CO2 aus einem Abgasstrom (11) einer Verbrennungsvorrichtung (10), welche neben einer einen Absorber (21) und einen Desorber (22) aufweisenden CO2-Abscheidungsvorrichtung (20) einen Speicher (30) zur Bevorratung eines Wärmetransferfluids (35) aufweist, wobei der Speicher (30) und der Desorber (22) wärmetechnisch über ein Leitungssystem (40) miteinander gekoppelt sind, und wobei der Speicher (30) mit einer elektrisch betriebenen Heizvorrichtung (50) thermisch gekoppelt ist, die eine thermische Konditionierung des Wärmetransferfluids (35) in dem Speicher (30) ermöglicht.

## Beschreibung

Die vorliegende Erfindung betrifft eine Einrichtung zur Abscheidung von CO₂ aus einem Abgas einer Verbrennungsvorrichtung sowie ein Verfahren zum Betrieb einer solchen Einrichtung.

Die Abscheidung von CO₂ aus dem Abgas eines fossil befeuerten Kraftwerks bzw. einer fossil befeuerten Industrieanlage hat nicht nur im Hinblick auf die von zahlreichen Staaten implementierten Emissionshandelsübereinkommen hohe Bedeutung erlangt. Zudem wurden über die letzten Jahre vor allem auch in der Europäischen Union Gesetze verabschiedet, die die Technik der CO2-Abscheidung direkt zum Ziel haben. Bspw. ist hier die schon in zahlreichen Europäischen Staaten umgesetzte Europäische CCS-Richtlinie aus dem Jahr 2009 der Europäischen Union zu nennen, die in den Jahren bis 2020 den Neubau hocheffizienter Kraftwerke durch Anwendung der CCS-Technologie fördert. Andere außereuropäische Staaten verfolgen vergleichbare rechtliche Ansätze.

Zur Abscheidung von CO₂ aus dem Abgas eines fossil befeuerten Kraftwerks sind mehrere Lösungen bereits vorgeschlagen. Darunter ist die von der Anmelderin entwickelte Technologie des Post-Cap zu zählen, die eine in Bezug auf den Verbrennungsprozess nachfolgende Abscheidung des CO2 auch dem Abgas ermöglicht. Die betreffende Abscheidungsvorrichtung sieht die gezielte Behandlung des Abgases mittels einer wässrigen Lösung von Aminosäuresalzen als Waschmittel (Solvent) vor, die eine selektive Bindung des CO₂ ermöglichen. In einem Desorber dieser Vorrichtung wird der Komplex von Aminosäuresalzen und CO₂ nach thermischer Behandlung wieder aufgebrochen, so dass das frei werdende CO₂ gasförmig abgetrennt werden kann. Das während diesem Vorgang wieder gewonnene Solvent kann für eine erneute CO₂-Abscheidung einem Absorber zugeführt werden. Einzelheiten dieser Technologie sind bspw. in der Patentanmeldung DE 10 2010 013 729.4 der Anmelderin beschrieben.

Die Abscheidung von CO₂ aus einem Abgasstrom mittels dieser Technologie erfordert einerseits elektrische Energie, um bspw. die von der CO₂-Abscheidevorrichtung umfassten Pumpen, Verdichter und weitere elektrische Verbrauchseinheiten zu betreiben, sowie thermische Energie, die für die Regeneration des Solvents in dem Desorber notwendig ist. Gemäß dem Stand der Technik wird die dem Desorber zugeführte Wärme typischerweise aus dem Prozessdampf eines Kraftwerks bzw. einer industrietechnischen Verbrennungsanlage entnommen. Damit geht jedoch die dem Desorber zugeführte thermische Energie für die durch den Prozessdampf unterhaltenen Prozesse verloren. Insbesondere bei der Stromerzeugung mittels eines durch den Prozessdampf unterstützten Dampfprozesses resultiert ein unerwünschter verminderter Wirkungsgrad.

Weiterhin erweist es sich als nachteilig, dass eine Versorgung des Desorbers mittels Prozessdampf lediglich zu Zeiten erfolgen kann, zu welchen ausreichend Prozessdampf zur Verfügung steht. Da im Rahmen der Umgestaltung der landesweiten Energieversorgung in einigen Ländern etliche Kraftwerke nur noch intermittierend betrieben werden, bzw. starken Schwankungen der nachgefragten Kraftwerksleistung unterliegen, kann die Bereitstellung von Prozessdampf mitunter nurmehr auf einem zeitlich schwankenden Niveau gewährleistet werden.

Weiterhin ist es nachteilig, dass während des Anfahrens eines Kraftwerks dem Desorber mitunter noch nicht ausreichende Mengen an Wärme zugeführt werden können, um einen effizienten Betrieb der CO₂-Abscheidungsvorrichtung zu gewährleisten.

Somit stellt es sich als technisch erforderlich heraus, eine geeignete Einrichtung zur Abscheidung von CO₂ aus einem Abgasstrom einer Verbrennungsvorrichtung vorzuschlagen, welche die Nachteile aus dem Stand der Technik weitgehend vermeiden kann. Insbesondere ist es Aufgabe der vorliegenden Erfindung, eine Einrichtung vorzuschlagen, die eine energieeffiziente CO₂-Abscheidung aus einem Abgasstrom ermöglicht. Überdies soll eine Einrichtung zur Abscheidung von CO₂ vorgeschlagen werden, deren Betriebsbereitschaft geringeren zeitlichen Schwankungen unterliegt, bzw. nicht nur ausschließlich durch den Betriebszustand der Verbrennungsvorrichtung bestimmt wird.

Erfindungsgemäß wird diese Aufgabe durch eine Einrichtung zur Abscheidung von CO₂ aus einem Abgasstrom einer Verbrennungsvorrichtung gemäß Anspruch 1 sowie ein Verfahren zum Betrieb einer solchen Einrichtung gemäß Anspruch 13 gelöst.

Insbesondere wird die der Erfindung zugrunde liegende Aufgabe mit einer Einrichtung zur Abscheidung von CO₂ aus einem Abgasstrom einer Verbrennungsvorrichtung gelöst, welche neben einer einen Absorber und einen Desorber aufweisenden CO₂-Abscheidungsvorrichtung einen Speicher zur Bevorratung eines Wärmetransferfluids aufweist, wobei der Speicher und der Desorber wärmetechnisch über ein Leitungssystem miteinander gekoppelt sind, und wobei der Speicher mit einer elektrisch betriebenen Heizvorrichtung thermisch gekoppelt ist, die eine thermische Konditionierung des Wärmetransferfluids in dem Speicher ermöglicht.

Weiterhin wird die der Erfindung zugrunde liegende Aufgabe durch ein Verfahren zum Betrieb einer Einrichtung zur Abscheidung von CO₂ aus einem Abgasstrom einer Verbrennungsvorrichtung gelöst, welche neben einer einen Absorber und einen Desorber aufweisenden CO₂-Abscheidungsvorrichtung einen Speicher zur Bevorratung eines Wärmetransferfluids aufweist, wobei der Speicher und der Desorber wärmetechnisch miteinander gekoppelt sind, und wobei der Speicher mit einer elektrisch betriebenen Heizvorrichtung gekoppelt ist, welches Verfahren folgende Schritte aufweist:
- Betreiben der Heizvorrichtung unter Verbrauch von elektrischer Leistung zur Erwärmung des Wärmetransferfluids in dem Speicher;
- Erwärmen eines dem Desorber zugeführten und mit CO₂ beladenen Solvents der CO₂-Abscheidungsvorrichtung mittels des erwärmten Wärmetransferfluids;

Erfindungsgemäß ist folglich vorgesehen, dass die Einrichtung zur Abscheidung von CO₂ neben einer einen Absorber und einen Desorber aufweisenden CO₂-Abscheidungsvorrichtung zusätzlich noch einen Speicher aufweist, in welchem Wärmetransferfluid bevorratet werden kann. Der Speicher ist mit einer elektrisch betriebenen Heizvorrichtung gekoppelt, die eine thermische Konditionierung des Wärmetransferfluids in dem Speicher erlaubt. Erfindungsgemäß kann also das in dem Speicher befindliche Wärmetransferfluid soweit erwärmt werden, dass es ein gewünschtes Temperaturniveau erreicht. Nach Erreichen dieses Temperaturniveaus kann das Wärmetransferfluid über das Leitungssystem dem Desorber der CO₂-Abscheidungsvorrichtung zugeführt werden, wobei die in dem Wärmetransferfluid gespeicherte Wärme wenigstens teilweise an den Desorber übertragen wird.

Erfindungsgemäß kann die Versorgung des Desorbers mit Wärme mit Hilfe des Speichers von dem Betrieb der Verbrennungsvorrichtung wenigstens soweit entkoppelt werden, dass der Desorber auch dann mit Wärme versorgt werden kann, wenn die Verbrennungsvorrichtung selbst nicht oder nur in einem geringeren Lastzustand betrieben wird. Folglich ist es bspw. möglich, dass der mit dem Wärmetransferfluid gefüllte Speicher bei Betrieb der Verbrennungsvorrichtung mit ausreichenden Mengen an thermischer Energie versorgt wird, um auch nach Abschalten der Verbrennungsvorrichtung bzw. nach einer Änderung des Lastzustandes den Desorber über den Speicher noch mit ausreichend Wärme zu versorgen. Vor allem während des Anfahrens der Verbrennungsvorrichtung kann so dem Desorber über den Speicher ausreichend Wärme zugeführt werden, um einen effizienten Betrieb der CO₂-Abscheidungsvorrichtung gewährleisten zu können.

Weiterhin erweist es sich als vorteilhaft, Wärme dann mit Hilfe des in dem Speicher befindlichen Wärmetransferfluids zu speichern, wenn ausreichend elektrische Leistung, insbesondere in den öffentlichen Stromversorgungsnetzwerken, zur Speicherung zur Verfügung steht. So ist es bspw. vorteilhaft, zu Zeiten des Angebots an Überschussstrom in den öffentlichen Stromversorgungsnetzwerken diesen zur Erzeugung von Wärme einzusetzen, welche dann mit Hilfe des Wärmetransferfluids in dem Speicher zwischengespeichert werden kann. Die so in dem Speicher zwischengespeicherte thermische Energie kann zu einem späteren Zeitpunkt, etwa, wenn mehr Stromnachfrage als Stromangebot in den öffentlichen Stromversorgungsnetzwerken vorherrscht, erneut entnommen werden, um damit den Desorber energieeffizient zu betreiben. Insbesondere kann dann auf die vollständige Versorgung des Desorbers mittels Prozessdampf verzichtet werden, wobei wenigstens ein Teil der Wärme aus dem Speicher entnommen werden kann.

Aufgrund des elektrischen Betriebs der Heizvorrichtung ist zudem eine technisch verhältnismäßig einfache Lösung verwirklicht, bei der elektrischer Strom schnell in eine andere, leicht speicherfähige Energieform überführt wird. Aufgrund des elektrischen Betriebs der Heizvorrichtung kann zudem auch ohne Probleme auf Schwankungen des Stromangebots reagiert werden.

Gemäß einer ersten besonders bevorzugten Ausführungsform der erfindungsgemäßen Einrichtung ist vorgesehen, dass die Heizvorrichtung als durch einen Generator als Motor angetriebene Gasturbine ausgeführt ist, deren Abgas mit dem Speicher zur Wärmeübertragung zusammenwirkt. Ausführungsgemäß wird also die nachgefragte elektrische Energie zum Betrieb des Generators als Motor eingesetzt, so dass die damit in mechanischer Verbindung stehende Gasturbine eine erzwungene Drehbewegung ausführt. Während dieses Betriebs der Gasturbine wird Luft in die Kompressionsstufe der Gasturbine eingesaugt, und verdichtet, wobei eine im Wesentlichen adiabatische Erwärmung der verdichteten Luft die Folge ist. Die Lufterwärmung kann zusätzlich noch durch eine geeignete Befeuerung der Gasturbine unterstützt werden. Das aus der Gasturbine austretende Abgas, welches im Vergleich zu der eingesogenen Luft deutlich erwärmt ist, wird dem Speicher zugeleitet, so dass nach geeigneter Wärmeübertragung das in dem Speicher befindliche Wärmetransferfluid erwärmt wird. Je nach Drehzahl der durch den Generator als Motor angetriebenen Gasturbine können so Temperaturen des Abgasstroms bis etwa 200 °C erreicht werden (ohne Zufeuerung mittels Verbrennung von Brennstoff in der Gasturbine). Der Einsatz der Gasturbine als Heizvorrichtung ist insbesondere aufgrund der guten Verfügbarkeit von Gasturbinen besonders vorteilhaft. Die Gasturbinen müssen für einen solchen Betrieb lediglich geringfügig angepasst werden, so dass auch bei nur geringen Investitionskosten bereits eine geeignete Heizvorrichtung zur Verfügung gestellt werden kann.

Alternativ zu dieser als Gasturbine ausgeführten Heizvorrichtung kann die Heizvorrichtung auch als elektrische Widerstandsheizvorrichtung ausgebildet sein, die insbesondere an oder in dem Speicher angebracht ist. Hierbei kann elektrische Leistung unmittelbar in thermische Wärme überführt werden, die dem Speicher ohne wesentlichen Wärmewiderstand zugeführt werden kann. Eine solche Widerstandsheizvorrichtung stellt sich folglich als energetisch besonders effizient dar.

Ausführungsgemäß ist es auch möglich, dass das Leitungssystem ein Entspannungsbehältnis aufweist, welches dazu ausgebildet ist, entspanntes Wärmetransferfluid in eine kondensierte Phase und in eine gasförmige Phase zu trennen. Ein solches Entspannungsbehältnis, welches auch als "Flash Vessel" bezeichnet wird, erlaubt insbesondere unter Druck stehende überhitzte Flüssigkeiten auf ein geringeres Druckniveau zu entspannen, wobei das entspannte Wärmetransferfluid sich in zwei unterschiedliche Phasen, welche sich im Wesentlichen im thermischen Gleichgewicht befinden, trennen lässt. Demgemäß ist es auch besonders bevorzugt, wenn das Wärmetransferfluid in dem Speicher unter Druck und überhitzt vorliegt, so dass auch verhältnismäßig große Mengen an thermischer Energie darin gespeichert werden können. Ferner steht damit auch für den Desorber der CO₂-Abscheidungsvorrichtung Wärme auf einem verhältnismäßig hohen Temperaturniveau zur Verfügung.

Als besonders vorteilhaft erweist sich der Einsatz eines Entspannungsbehältnisses, wenn das Leitungssystem ein Entspannungsventil aufweist, welches dem Entspannungsbehältnis vorgeschaltet ist. Das Entspannungsventil gewährleistet hierbei eine gezielte und kontrollierte Entspannung des Wärmetransferfluids.

Ebenfalls als vorteilhaft erweist es sich, wenn das Leitungssystem einen ersten Wärmetauscher aufweist, welcher für einen Wärmeaustausch zwischen dem Entspannungsbehältnis zugeleiteten Wärmetransferfluid und dem aus dem Entspannungsbehältnis abgeleiteten gasförmigen Wärmetransferfluid ausgebildet ist. Das gasförmige Wärmetransferfluid vermag hierbei einen Teil der thermischen Energie des dem Entspannungsbehältnis zugeleiteten Wärmetransferfluids zur Überhitzung aufzunehmen, um seinen Wärmeinhalt zu erhöhen. Folglich kann sichergestellt werden, dass das aus dem Speicher abgeleitete gasförmige Wärmetransferfluid nicht bereits in dem Leitungssystem 40 kondensiert, bevor es etwa in einem Reboilerwärmetauscher 25 einen Teil seiner thermischen Energie abgeben kann.

Gemäß einer weiteren Ausführungsform ist es auch denkbar, dass das Leitungssystem einen zweiten Wärmetauscher aufweist, welcher für einen Wärmeaustausch zwischen dem aus dem Entspannungsbehältnis abgeleiteten gasförmigen Wärmetransferfluid und dem dem Desorber zugeleiteten, mit CO₂ beladenen Solvent der CO₂-Abscheidungsvorrichtung ausgebildet ist. Der zweite Wärmetauscher erlaubt einen gezielten Wärmeeintrag aus dem Strom des gasförmigen Wärmetransferfluids in den Desorber. Bevorzugt ist der zweite Wärmetauscher 80 als Reboilerwärmetauscher 25 ausgebildet.

Gemäß einer weiteren Ausführungsform ist auch denkbar, dass das Leitungssystem in den Desorber mündet und Wärmetransferfluid in diesen abgibt. Folglich ist ein unmittelbarer Wärmeaustausch zwischen Wärmetransferfluid und dem von der CO₂-Abscheidungsvorrichtung umfassten Solvent möglich. Hierbei ist jedoch erforderlich, dass in einem nachfolgenden Prozessschritt das Wärmetransferfluid wieder zurückgewonnen wird. Typischerweise ist in einem solchen Fall das Wärmetransferfluid Wasser, welches in den Desorber eingeleitet wird, wobei sich das Wasser mit dem darin befindlichen Solvent mischt. In einem weiteren Prozessschritt kann anschließend etwa die Auskondensation dieses so eingebrachten Wassers erfolgen, sowie die Rückführung in einen Nutzungskreislauf.

Ausführungsgemäß kann auch vorgesehen sein, dass das Leitungssystem zyklisch ausgebildet ist, so dass nach wärmetechnischer Wechselwirkung des Wärmetransferfluids mit dem Desorber, dieses wieder zu dem Speicher zurückgeführt werden kann. Ein solches zyklisches Leitungssystem ist nicht nur materialschonend und wartungsfreundlich sondern auch energieeffizient. Aufgrund der Rückführung des Wärmetransferfluids in den Speicher kann die dem Wärmetransferfluid innewohnende Restwärme zurück gewonnen und erneut nutzbar gemacht werden.

Gemäß einer weiteren Ausführungsform der Erfindung ist vorgesehen, dass das Leitungssystem derart ausgebildet ist, dass die kondensierte Phase des entspannten Wärmetransferfluids wieder zu dem Speicher zurückgeführt werden kann. Damit kann erneut eine wartungsfreundliche, resourcenschonende wie auch energieeffiziente Lösung bereitgestellt werden.

Gemäß einer besonders bevorzugten Ausführungsform der Erfindung ist vorgesehen, dass der Speicher ein Druckspeicher ist. Folglich kann dem von dem Speicher umfassten Wärmetransferfluid ein im Vergleich zu einem offenen Speicher deutlich höherer Wärmeinhalt übertragen werden, der nachfolgend für die Nutzung in dem Desorber zur Verfügung stehen kann. Zusätzlich ist es auch möglich, aufgrund der Druckspeicherung die Wärmeverluste im Vergleich zu einem offenen System geringer zu halten. Besonders vorteilhaft ist ein Druckspeicher in Verbindung mit Wasser als Wärmetransferfluid. Andere, höher siedende Wärmetransferfluide können jedoch auch alternativ vorgesehen sein. Diese können in dem Speicher ebenfalls unter Umgebungsdruck oder unter erhöhtem Druck im Vergleich zu diesem bevorratet werden.

Gemäß einer besonders bevorzugten Ausführungsform der Erfindung ist vorgesehen, dass das Wärmetransferfluid Wasser ist. Dieses ist nicht nur kostengünstig in seiner Bereitstellung sondern auch leicht technisch handhabbar.

Gemäß einer anderen besonders bevorzugten Ausführungsform des erfindungsgemäßen Verfahrens ist vorgesehen, dass die Heizvorrichtung unter Verbrauch von elektrischem Überschussstrom betrieben wird. Damit kann ein besonders effizienter Betrieb der Heizvorrichtung gewährleistet werden, da der verbrauchte Überschussstrom verhältnismäßig kostengünstig, oder sogar gegen Vergütung aus den öffentlichen Stromversorgungsnetzwerken entnommen werden kann. Das ausführungsgemäße Verfahren ermöglicht zudem eine geeignete Verbrauchseinheit zur Verfügung zu stellen, die als Regeleinheit bei Angebot von Überschussstrom in den öffentlichen Stromversorgungsnetzwerken Anwendung finden kann.

Entsprechend einer besonders bevorzugten Ausführungsform des erfindungsgemäßen Verfahrens kann auch vorgesehen sein, dass weiterhin ein Schritt des thermischen Entspannens des erwärmten Wärmetransferfluids in einem Entspannungsbehältnis umfasst ist, bevor das Wärmetransferfluid das dem Desorber zugeführte und mit CO₂ beladene Solvent der CO₂-Abscheidungsvorrichtung erwärmt. Wie weiter oben bereits ausgeführt, erlaubt die Entspannung des erwärmten Wärmetransferfluids in dem Entspannungsbehältnis eine Trennung in eine gasförmige und in eine flüssige Phase und damit eine vorteilhafte thermische Konditionierung desselben.

Alternativ zu dieser Ausführungsform kann auch vorgesehen sein, dass ein Schritt des Betreibens eines als Motor betriebenen Generators zum Antrieb einer Gasturbine umfasst ist, wobei das aus der Gasturbine austretende Abgas mit dem Speicher zur Wärmeübertragung zusammenwirkt. Folglich wird die Gasturbine als elektrisch betriebene Heizvorrichtung betrieben, die die Umsetzung von elektrischer in thermische Energie ermöglicht.

Weitere Ausführungsformen ergeben sich aus den Unteransprüchen.

Nachfolgend soll anhand von Figuren die Erfindungsidee im Detail näher erklärt werden. Hierbei sei darauf hingewiesen, dass die schematische Natur der Figuren keine Einschränkung hinsichtlich der Konkretisierung des Erfindungsgegenstandes bedeutet.

Fernerhin sei darauf hingewiesen, dass die in den Figuren ausgewiesenen Merkmale sowohl für sich alleine wie auch in Zusammensicht mit den von anderen Ausführungsformen umfassten Merkmalen beansprucht werden.

Hierbei zeigen:
- Figur 1: eine erste Ausführungsform der erfindungsgemäßen CO₂-Ascheidungsvorrichtung in einer schematischen Schaltansicht;
- Figur 2: eine Ausführungsform der erfindungsgemäßen Einrichtung zur Abscheidung von CO₂ aus einem Abgasstrom in schematischer Teilansicht;
- Figur 3: eine weitere Ausführungsform der erfindungsgemäßen Einrichtung zur Abscheidung von CO₂ in einer schematischen Schaltansicht;
- Figur 4: eine weitere Ausführungsform der erfindungsgemäßen Einrichtung zur Abscheidung von CO₂ in einer schematischen Schaltansicht.

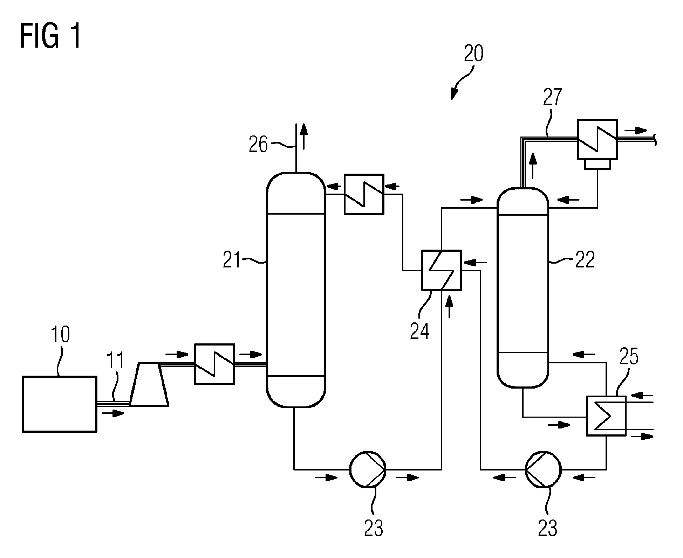

Figur 1 zeigt eine Ausführungsform einer CO₂-Abscheidungsvorrichtung 20, wie sie von einer Einrichtung 1 zur Abscheidung von CO₂ aus einem Abgasstrom 11 einer Verbrennungsvorrichtung 10 umfasst sein kann. Die CO₂-Abscheidungsvorrichtung 20 weist einen Absorber 21 sowie einen Desorber 22 auf, die beide zur CO₂-Abscheidung aus dem Abgasstrom 11 zusammen wirken. Hierbei wird der aus der Verbrennungsvorrichtung 10 austretende Abgasstrom 11 zunächst dem Absorber 21 zugeführt, in welchem in dem Abgasstrom durch Berieselung mit einem Solvent (Waschmittel) das vorhandene CO₂ zum Großteil gebunden wird. Das gereinigte Abgas tritt aus einer Ableitung 26 zur möglicherweise weiteren Nutzung bzw. Reinigung aus. Ebenso kann das Abgas in die freie Umgebung ohne weitere Nutzung abgeführt werden. Das abgeschiedene CO₂ verbindet sich mit dem Solvent zu einem Komplex und sammelt sich am unteren Ende des Absorbers 21 an. Das mit CO₂ beladene Solvent wird mittels einer Pumpe 23 dem Desorber 22 zugeführt, in welchem das CO₂ durch thermische Behandlung wiederum von dem Solvent abgetrennt wird. Hierzu wird das mit CO₂ beladene Solvent in den Desorber 22 eingeregnet, wobei das freiwerdende CO₂ durch eine CO₂-Ausgangsleitung 27 am Kopfende des Desorbers 22 abgeführt werden kann. Das sich am unteren Ende des Desorbers 22 ansammelnde Solvent wird einem Reboilerwärmetauscher 25 zugeführt, der das Solvent mit ausreichender thermischer Energie versorgt, um die Abspaltung von CO₂ von dem Solvent vorantreiben zu können. Hierbei wird insbesondere das Solvent verdampft und erneut dem Desorber 22 zugeführt. Gleichzeitig wird damit dem Desorber 22 die für die Wiedergewinnung des CO₂-armen Solvents (regenerierten Solvents) wesentliche Wärme zugeführt. Das nach dieser Wärmebehandlung zur Verfügung stehende regenerierte Solvent wird mittels einer Pumpe erneut dem Absorber 21 zur CO₂-Abscheidung zugeführt. Um die Wärmebilanz zwischen Absorber 21 und Desorber 22 zu verbessern, ist zudem ein Wärmetauscher zwischen dem vom Absorber 21 abgehenden Strom von CO₂ beladenem Solvent und dem vom Desorber 22 abgehenden Strom von regenerierten Solvent vorgesehen.

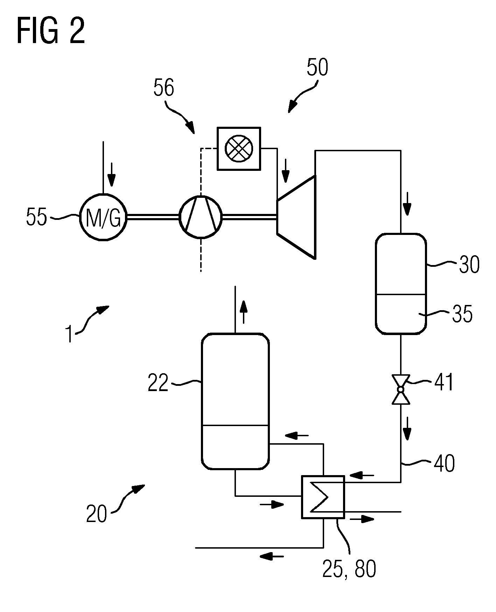

Figur 2 zeigt eine schematische Teilansicht einer weiteren Ausführungsform der erfindungsgemäßen Einrichtung 1 zur Abscheidung von CO₂ aus einem Abgasstrom 11 einer Verbrennungsvorrichtung 10 (vorliegend nicht gezeigt). In der Figur ist lediglich der Desorber 22 gezeigt, welcher über ein Leitungssystem 40 mit einem Speicher 30 gekoppelt ist. Der Speicher 30 umfasst hierbei eine vorbestimmte Menge an Wärmetransferfluid 35, die über das Leitungssystem 40 gezielt einem Reboilerwärmetauscher 25 bzw. einem zweiten Wärmetauscher 80 zugeführt werden kann. Der Reboilerwärmetauscher 25 bzw. der zweite Wärmetauscher 80 erlaubt einen Eintrag von Wärme in den Desorber 22 über geeignete Leitungsabschnitte. Hierbei wird die von dem Wärmetransferfluid 35 beinhaltete Wärme über den Reboilerwärmetauscher 25 bzw. den zweiten Wärmetauscher 80 an das von dem Desorber 22 umfasste Solvent übertragen. Aufgrund der Wärmeübertragung erfolgt eine Abtrennung des CO₂ von dem beladenen Solvent. Um die Menge an Wärmetransferfluid 35 vorteilhaft einzustellen, die dem Reboilerwärmetauscher 25 bzw. dem zweiten Wärmetauscher 80 zugeführt wird, ist in dem Leitungssystem 40 ein Ventil 41 bzw. allgemein ein geeignetes Einstellmittel, vorgesehen.

Die von dem Wärmetransferfluid 35 beinhaltete Wärme wird im Wesentlichen durch die elektrisch betriebene Heizvorrichtung 50 bereitgestellt, die vorliegend als eine durch einen Generator 55 als Motor angetriebene Gasturbine 56 ausgebildet ist. Zur Erzeugung von Wärme mittels des als Motor angetriebenen Generators 55 wird von diesem elektrische Energie in mechanische Bewegungsenergie der Gasturbine 56 umgesetzt. Die Aufnahme von elektrischer Energie ist vorliegend als ein nicht weiter bezifferter Pfeil dargestellt. Durch den Antrieb des Generators 55 als Motor erfolgt eine Verdichtung von Einsaugluft in der Verdichterstufe der Gasturbine 56, wobei es zu einer im Wesentlichen adiabatischen Erwärmung der verdichteten Luft kommt. Ausführungsgemäß ist es zudem möglich, zur weiteren Erhöhung des Wärmeinhalts dieser verdichteten Luft, in der Brennkammer der Gasturbine 56 Brennstoff zur zusätzlichen Wärmeübertragung zu verfeuern. Tritt die so behandelte verdichtete Luft aus der Gasturbine 56 aus, weist sie ein erhöhtes Temperaturniveau im Vergleich zur Einsaugluft auf. Durch eine geeignete Leitung dieser thermisch konditionierten Luft aus der Gasturbine 56 zur thermischen Kopplung mit dem Speicher 30 kann die von der Luft umfasste Wärme wenigstens teilweise auf das Wärmetransferfluid 35 im Speicher 30 übertragen werden. Anschließend steht die so vom Wärmetransferfluid 35 beinhaltete thermische Wärme zur weiteren Nutzung im Desorber 22 zur Verfügung.

Gemäß einer alternativen Ausführungsform kann auch vorgesehen sein, dass die Gasturbine 56 bei regulärem Strom erzeugendem Betrieb die Funktion der Verbrennungsvorrichtung 10 erfüllt. Lediglich bei Strom verbrauchendem Betrieb, d.h. wenn der Generator 55 als Motor angetrieben wird, wird elektrische Energie in thermische Energie zur Erwärmung des Speichers 30 umgewandelt.

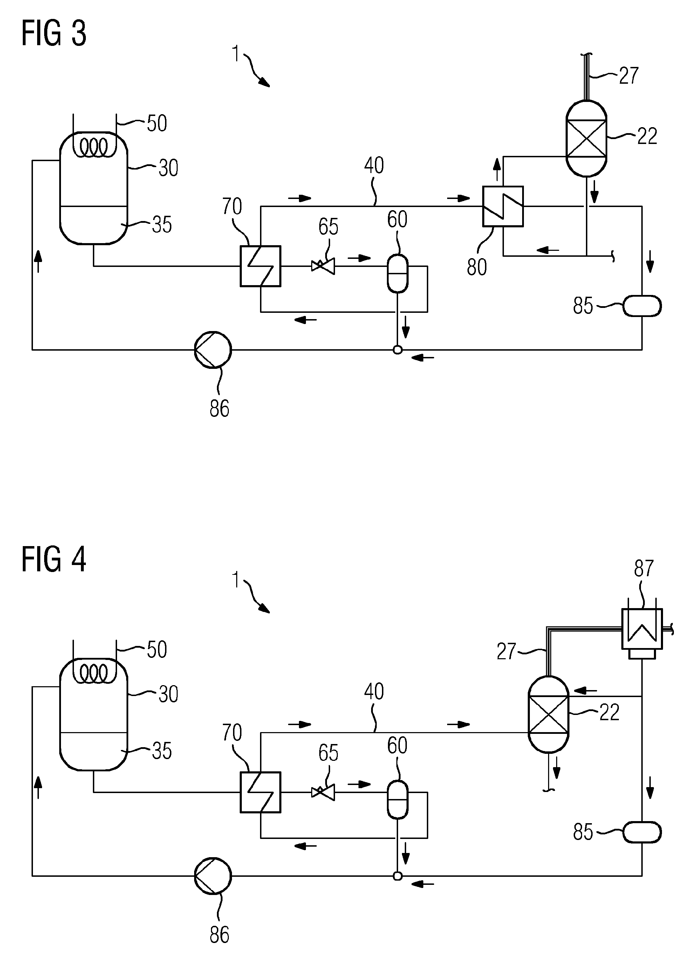

Figur 3 zeigt eine weitere Ausführungsform der erfindungsgemäßen Einrichtung zur Abscheidung von CO₂ aus einem Abgasstrom 11 einer Verbrennungsvorrichtung 10 (vorliegend nicht gezeigt) in schematischer Schaltansicht. Vergleichbar zu der in Figur 2 gezeigten Ausführungsform der Erfindung ist wiederum ein Speicher 30 umfasst, welcher eine vorbestimmte Menge an Wärmetransferfluid 35 aufweist. Zur thermischen Konditionierung dieses Wärmetransferfluids 35 ist weiterhin eine elektrisch betriebene Heizvorrichtung 50 vorgesehen, die vorliegend lediglich schematisch als Heizwendel dargestellt ist. Mittels dieser elektrisch betriebenen Heizvorrichtung 50 kann elektrische Energie in thermische Energie umgesetzt werden, die von dem Wärmetransferfluid 35 in dem Speicher 30 zwischengespeichert werden kann. Bei Bedarf kann Wärmetransferfluid 35 aus dem Speicher 30 entnommen werden, und einem Entspannungsbehältnis 60 ("Flash Vessel") zugeführt werden.

Hierbei ist anzuführen, dass das von dem Speicher 30 umfasste Wärmetransferfluid 35 unter Druck in überhitztem Zustand vorliegt. Nach Zuführung des Wärmetransferfluids 35 an das Entspannungsbehältnis 60 erfolgt eine thermische Entspannung, die eine Phasentrennung des Wärmetransferfluids 35 zur Folge hat. Die Entspannung wird hierbei mittels eines dem Entspannungsbehältnis 60 vorgeschalteten Entspannungsventil 65 erreicht. Bei der Phasentrennung wird ein Teil des Wärmetransferfluids 35 in flüssiger Phase im Fußbereich des Entspannungsbehältnisses 60 abgeschieden, wobei der Rest des Entspannungsbehältnisses 60 von Dampf (gasförmigem Wärmetransferfluid 35) eingenommen wird, welcher dem Desorber 22 zugeführt wird.

Bevor der gasförmige Anteil des Wärmetransferfluids 35 dem Desorber 22 zugeführt wird, erfolgt mittels eines ersten Wärmetauschers 70 ein Wärmeübertrag zwischen dem gasförmigen Wärmetransferfluid 35 und dem dem Entspannungsbehältnis 60 zuzuführenden Wärmetransferfluid 35.

Zur weiteren Wärmeübertragung aus dem gasförmigen Wärmetransferfluid ist von dem Leitungssystem 40 ein zweiter Wärmetauscher 80 umfasst, der auch im Sinne eines Reboilers (siehe auch Figur 1) den Desorber 22 mit thermischer Energie aus dem gasförmigen Wärmetransferfluid 35 versorgt.

Nach erfolgter Wärmeübertragung kann das Wärmetransferfluid 35 auskondensiert werden und in einem Kondensatbehälter 85 zur weiteren Fluidleitung vorgehalten werden. Ausführungsgemäß wird das so kondensierte Wärmetransferfluid 35 zusammen mit dem in dem Entspannungsbehältnis 60 auskondensierten Wärmetransferfluid 35 erneut dem Speicher 30 zur weiteren thermischen Behandlung zugeführt. Hierbei kann eine Pumpe 86, die Beaufschlagung des Wärmetransferfluids mit einer Strömungsbewegung ausführen.

Figur 4 zeigt eine weitere Ausführungsform der erfindungsgemäßen Einrichtung 1 zur Abscheidung von CO₂ aus einem Abgasstrom 11 einer Verbrennungsvorrichtung 10 (vorliegend nicht gezeigt) in schematischer Schaltansicht. Die in Figur 4 gezeigte Ausführungsform unterscheidet sich von der in Figur 3 gezeigten Ausführungsform lediglich dahingehend, dass das dem Desorber 22 zugeführte Wärmetransferfluid 35 seine Wärme an den Desorber 22 nicht über einen zweiten Wärmetauscher sondern durch eine direkte Injektion in den Desorber 22 abgibt. Hierdurch wird das Wärmetransferfluid 35 in den Desorber 22 direkt injiziert, wobei während des Mischungsvorganges zwischen Wärmetransferfluid 35 und von dem Desorber 22 umfassten Solvent gleichzeitig ein Wärmeübertrag erfolgt. Um das Wärmetransferfluid 35 zurück zu gewinnen, kann dieses bspw. mittels eines Kondensators 87 auskondensiert werden. Insbesondere in dem Fall, in welchem das Wärmetransferfluid 35 Wasser ist, wird aus dem Desorber 22 über die CO₂-Ausgangsleitung 27 ein Gemisch von gasförmigem CO₂ und Wasser abgeleitet, so dass die Rückgewinnung des Wassers durch Auskondensation mittels des Kondensators 87 leicht vorgenommen werden kann.

## Patentansprüche

1. Einrichtung (1) zur Abscheidung von CO₂ aus einem Abgasstrom (11) einer Verbrennungsvorrichtung (10), welche neben einer einen Absorber (21) und einen Desorber (22) aufweisenden CO₂-Abscheidungsvorrichtung (20) einen Speicher (30) zur Bevorratung eines Wärmetransferfluids (35) aufweist, wobei der Speicher (30) und der Desorber (22) wärmetechnisch über ein Leitungssystem (40) miteinander gekoppelt sind, und wobei der Speicher (30) mit einer elektrisch betriebenen Heizvorrichtung (50) thermisch gekoppelt ist, die eine thermische Konditionierung des Wärmetransferfluids (35) in dem Speicher (30) ermöglicht.

2. Einrichtung gemäß Anspruch 1,
**dadurch gekennzeichnet, dass**
die Heizvorrichtung (50) als durch einen Generator (55) als Motor angetriebene Gasturbine (56) ausgeführt ist, deren Abgas (57) mit dem Speicher (30) zur Wärmeübertragung zusammen wirkt.

3. Einrichtung gemäß Anspruch 1,
**dadurch gekennzeichnet, dass**
die Heizvorrichtung (50) eine elektrische Widerstandsheizvorrichtung (50) ist, die insbesondere an oder in dem Speicher (30) angebracht ist.

4. Einrichtung gemäß einem der vorhergehenden Ansprüche,
**dadurch gekennzeichnet, dass**
das Leitungssystem (40) ein Entspannungsbehältnis (60) aufweist, welches dazu ausgebildet ist, entspanntes Wärmetransferfluid (35) in eine kondensierte Phase und in eine gasförmige Phase zu trennen.

5. Einrichtung gemäß Anspruch 4,
**dadurch gekennzeichnet, dass**
das Leitungssystem (40) ein Entspannungsventil (65) aufweist, welches dem Entspannungsbehältnis (60) vorgeschaltet ist.

6. Einrichtung gemäß einem der vorhergehenden Ansprüche 4 oder 5,
**dadurch gekennzeichnet, dass**
das Leitungssystem (40) einen ersten Wärmetauscher (70) aufweist, welcher für einen Wärmeaustausch zwischen dem dem Entspannungsbehältnis (60) zugeleiteten Wärmetransferfluid (35) und dem aus dem Entspannungsbehältnis (60) abgeleiteten gasförmigen Wärmetransferfluid (35) ausgebildet ist.

7. Einrichtung gemäß einem der vorhergehenden Ansprüche 4 bis 6,
**dadurch gekennzeichnet, dass**
das Leitungssystem (40) einen zweiten Wärmetauscher (80) aufweist, welcher für einen Wärmeaustausch zwischen dem aus dem Entspannungsbehältnis (60) abgeleiteten gasförmigen Wärmetransferfluid (35) und dem dem Desorber (22) zugeleiteten, mit CO₂ beladenen Solvent der CO₂-Abscheidungsvorrichtung (20) ausgebildet ist.

8. Einrichtung gemäß einem der vorhergehenden Ansprüche,
**dadurch gekennzeichnet, dass**
das Leitungssystem (40) in den Desorber (22) mündet und Wärmetransferfluid (35) in diesen abgibt.

9. Einrichtung gemäß einem der vorhergehenden Ansprüche,
**dadurch gekennzeichnet, dass**
das Leitungssystem (40) zyklisch ausgebildet ist, so dass nach wärmetechnischer Wechselwirkung des Wärmetransferfluids (35) mit dem Desorber (22), dieses wieder zu dem Speicher zurückgeführt werden kann.

10. Einrichtung gemäß einem der vorhergehenden Ansprüche 4 bis 9,
**dadurch gekennzeichnet, dass**
das Leitungssystem (40) derart ausgebildet ist, dass die kondensierte Phase des entspannten Wärmetransferfluids (35) wieder zu dem Speicher zurückgeführt werden kann.

11. Einrichtung gemäß einem der vorhergehenden Ansprüche,
**dadurch gekennzeichnet, dass**
der Speicher (30) ein Druckspeicher ist.

12. Einrichtung gemäß einem der vorhergehenden Ansprüche,
**dadurch gekennzeichnet, dass**
das Wärmetransferfluid (35) Wasser ist.

13. Verfahren zum Betrieb einer Einrichtung (1) zur Abscheidung von CO₂ aus einem Abgasstrom (11) einer Verbrennungsvorrichtung (10), welche neben einer einen Absorber (21) und einen Desorber (22) aufweisenden CO₂-Abscheidungsvorrichtung (20) einen Speicher (30) zur Bevorratung eines Wärmetransferfluids (35) aufweist, wobei der Speicher (30) und der Desorber (22) wärmetechnisch miteinander gekoppelt sind, und wobei der Speicher (30) mit einer elektrisch betriebenen Heizvorrichtung (50) gekoppelt ist, welches Verfahren folgende Schritte aufweist:
- Betreiben der Heizvorrichtung (50) unter Verbrauch von elektrischer Leistung zur Erwärmung des Wärmetransferfluids (35) in dem Speicher (30);
- Erwärmen eines dem Desorber (22) zugeführten und mit CO₂ beladenen Solvents der CO₂-Abscheidungsvorrichtung (20) mittels des erwärmten Wärmetransferfluids (35);

14. Verfahren gemäß Anspruch 13,
**dadurch gekennzeichnet, dass**
weiterhin ein Schritt des thermischen Entspannens des erwärmten Wärmetransferfluids (35) in einem Entspannungsbehältnis (60) umfasst ist, bevor das Wärmetransferfluid (35) das dem Desorber (22) zugeführte und mit CO₂ beladene Solvent der CO₂-Abscheidungsvorrichtung (20) erwärmt.

15. Verfahren gemäß einem der Ansprüche 13 oder 14,
**dadurch gekennzeichnet, dass**
weiterhin ein Schritt des Betreibens eines als Motor betriebenen Generators (55) zum Antrieb einer Gasturbine (56) umfasst ist, wobei das aus der Gasturbine (56) austretende Abgas (57) mit dem Speicher (30) zur Wärmeübertragung zusammen wirkt.
